# EUROPEAN PATENT APPLICATION

(11) **EP 4 462 700 A1**
(43) Date of publication of application: **13.11.2024**
(21) Application number: 24174900.1
(22) Date of filing: 08.05.2024
(51) Int. Cl.: H04J 3/06

(54) **GRANDMASTER DIRECT SYNCHRONIZATION SYSTEM FOR OPTIMIZED PERFORMANCE IN SHARED MEDIA NETWORKS**

(30) Priority: 08.05.2023 US 202363500850 P; 07.05.2024 US 202418657607
(71) Applicant: Analog Devices International Unlimited Company, Limerick (IE)
(72) Inventor: Molina, Isaac, Co. Limerick (IE)
(74) Representative: Wallin, Nicholas James

(57) **Abstract**

A method is provided for synchronizing a non-primary clock to a primary clock in a network. The aspects include receiving a first, a second, and a third message pair, each including a sync message with an estimated time the sync message was transmitted and a follow-up message with an actual time the sync message was transmitted. The aspects include, responsive to the second message pair, setting a neighbor rate ratio between the primary clock and the non-primary clock to a midpoint value for non-primary clock control based on an ingress timestamp delta and an egress timestamp delta. The aspects include, responsive to the third message pair, fixing a phase value of the primary clock by setting an expected primary clock time value to a current timestamp of the primary clock without modification of the midpoint value. The aspects include adjusting the non-primary clock responsive to at least the midpoint value.

## Description

### CLAIM OF PRIORITY

The present application claims priority to U.S. Provisional Application No. 63/500850, filed on May 8, 2023, and hereby incorporated herein by reference in its entirety.

### BACKGROUND

The present disclosure relates generally to networks, and more particularly to a grandmaster direct synchronization system for optimized performance in shared media networks.

802.1 Active Standard (802.1AS), also known as the Institute of Electrical and Electronic Engineers (IEEE) 802.1AS-2020 standard or generalized Precision Time Protocol (gPTP), is a protocol designed to synchronize clocks within a network. 802.1AS is an extension of the Precision Time Protocol (PTP) defined in IEEE 1588. In gPTP, the synchronization process involves exchanging several types of messages, including Pdelay_Req, Pdelay_Resp, and Pdelay_Resp_Follow_Up, which are used to measure the propagation delay (Pdelay) on a link.

In a point-to-point link, Pdelay measurements can be performed without any issues because there are only two devices involved, and the propagation delay can be accurately measured.

However, in a multidrop link such as a multi-node network, multiple devices share the same physical medium, and communication is broadcast-based. As a result, it is challenging to accurately measure Pdelay between two devices because multiple devices can receive and process Pdelay_Req and Pdelay_Respmessages. This makes it difficult to determine which device is the source of a Pdelay_Respmessage and can lead to incorrect Pdelay values being calculated.

The neighbor rate ratio is computed to compensate for frequency drifts between primary and non-primary clocks. The ratio between two time intervals given by two different clocks. The first interval is the time difference between the transmissions of two frames by the sender, while the second one is the time difference between the receptions of these frames at the receiver. Thus, to evaluate the frequency drift between sender and receiver's clocks, these time intervals have to be identical when there is no drift between the two clocks.

Since the neighbor rate ratio is calculated based on Pdelay values, an inaccurate Pdelay measurement will lead to an incorrect neighbor rate ratio. The neighbor rate ratio is essential for gPTP to perform clock synchronization.

### SUMMARY

The following presents a simplified summary of one or more aspects in order to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects in a simplified form as a prelude to the more detailed description that is presented later.

According to aspects of the present disclosure, a computer-implemented method is provided for synchronizing a non-primary clock at a first node to a primary clock at a second node in a multi-node broadcast network. The method includes receiving a first, a second, and a third synchronization/follow-up (sync/follow-up) message pair. Each sync/follow-up message pair includes a sync message with an estimated time the sync message was transmitted and a follow-up message with an actual time the sync message was transmitted. The method further includes responsive to the second sync/follow-up message pair, setting a neighbor rate ratio between the primary clock and the non-primary clock to a midpoint value for non-primary clock control based on an ingress timestamp delta and an egress timestamp delta. The method also includes responsive to the third sync/follow-up message pair, fixing a phase value of the primary clock by setting an expected primary clock time value to a current timestamp of the primary clock without modification of the midpoint value. The method additionally includes adjusting the non-primary clock in synchronization with the primary clock responsive to at least the midpoint value being set to the neighbor rate ratio.

According to other aspects of the present disclosure a system is provided for synchronizing a non-primary clock at a first node to a primary clock at a second node in a multi-node broadcast network. The system includes a sync processor having a frame receiver configured to receive frames from the primary clock and the non-primary clock and generate a first, a second, and a third synchronization/follow-up (sync/follow-up) message pair. Each sync/follow-up message pair includes a sync message with an estimated time the sync message was transmitted and a follow-up message with an actual time the sync message was transmitted. The sync processor is further configured to, responsive to the second sync/follow-up message pair, set a neighbor rate ratio between the primary clock and the non-primary clock to a midpoint value for non-primary clock control based on an ingress timestamp delta and an egress timestamp delta. The sync processor is also configured to, responsive to the third sync/follow-up message pair, fix a phase value of the primary clock by setting an expected primary clock time value to a current timestamp of the primary clock without modification of the midpoint value. The system further includes a pi controller configured to adjust the non-primary clock in synchronization with the primary clock responsive to at least the midpoint value being set to the neighbor rate ratio.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, wherein dashed lines may indicate optional elements, and in which:
**FIG. 1** is an example muti-node network having a primary clock and at least one non-primary clock that is synchronized with the primary clock, in accordance with an example aspect.
**FIG. 2** is another example muti-node network having a primary clock and at least one non-primary clock that is synchronized with the primary clock, in accordance with an example aspect.
**FIG. 3** is an example synchronization (sync) processor, in accordance with an example aspect.
**FIG. 4** is an example packet, in accordance with an example aspect.
**FIG. 5** is an example customized version of generalized Precision Time Protocol (gPTP) developed for Ethernet-to-Edge Bus (E2B) that does not support Pdelay measurements and includes a custom rate ratio algorithm, in accordance with an example aspect.
**FIGS. 6-8** is an example method for synchronizing a non-primary clock at a first node to a primary clock at a second node in a multi-node broadcast network, in accordance with an example aspect.

### DETAILED DESCRIPTION

The present disclosure is directed to a grandmaster direct synchronization system for optimized performance in shared media networks.

In an aspect, three synchronization/follow-up (sync/follow-up) message pairs are used by the present disclosure to achieve synchronization between a primary clock (also referred to herein as grandmaster clock) that is located at one node of a multi-node network and a local clock (also referred to herein as a non-primary clock) located at another node of the multi-node network. Each of the sync/follow-up message pairs include a sync message with an estimated time the sync message was transmitted and a follow-up message with an actual time the sync message was transmitted. The first two sync/follow-up message pairs are received by a sync processor for calculating a neighbor rate ratio directly between the primary clock that is located at the one node and the non-primary clock located at the other node of the multi-node network. The calculated neighbor rate ratio is then provided to a proportional and integral (pi) controller to control the frequency and/or phase of the non-primary clock in order to synchronize the non-primary clock with the primary clock.

In an aspect, the present disclosure includes measuring a neighbor rate ratio directly between the primary clock and the non-primary clock upon reception of a second sync/follow up pair. In this period of time, a local timer is set to a midpoint, so as to measure an exact clock ratio between the primary clock and the local clock. This procedure can be configured to average over multiple sync/follow-up pairs in order to increase the accuracy. After the neighbor rate ratio has been calculated, the neighbor rate ratio is used to replace the current midpoint in the local timer, and the reception of the third pair sets the initial locking Generalized Precision Time Protocol (gPTP) time.

In 10Base-T1S, the measurement of the neighbor rate ratio between the local clock and the neighborhood device, as directed in the 802.1AS Specification, is not possible. Consequently, the present disclosure includes an algorithm that computes the rate ratio and yields an accurate measurement in three sync/follow-up pairs.

Following the initial sync/follow-up pair, the ingress and egress deltas cannot be calculated until the second pair is received. Once the syncEgressTimestampDelta and syncIngressTimestampDelta include value data, the midpoint value for the proportional and integral (pi) controller can be calculated. The nominal midpoint for the timer is currently set at 0xA0000000. In other aspects, other values (besides 0xA0000000) may be used.

Due to the difficulty in fixing the phase and frequency of the timer simultaneously without resorting to complex calculations, the present apparatus and method sets the frequency (speed) to the calculated addend_midpoint and the phase (current timer timestamp) to the expected grandmaster time to minimize the error. However, this may result in an inaccurate initial phase that worsens as the time difference between the sync message and the follow-up message increases.

On the third pair, the present apparatus and method assumes that the measured error is entirely due to a phase error and adjusts the time value without modifying the addend_midpoint. Following this final update, the pi controller can begin fine-tuning the error at the reception of each sync/follow-up pair.

In another aspect, the third pair is not used, and phase of the non-primary clock is calculated mathematically.

The present disclosure includes apparatus and methods configured to lock directly to the grandmaster controller bypassing Pdelay measurements and the functionality of avoiding extra math logic by doing the three step synchronization, where first the rate ratio frequency is fixed, and upon reception of the third sync/follow-up, the phase is fixed.

In other words, the apparatus and method solves the problem encountered by existing solutions by measuring the rate ratio directly between the grandmaster and the endpoint upon the reception of the second sync/follow up pair. In this period of time, the local timer is set to the midpoint, so that it is possible to measure the exact clock ratio between the gm and the local clock or xtal. This procedure can be configured to average over multiple pairs in order to increase the accuracy. After the rate ratio has been calculated, it replaces the current midpoint in the local timer, and the reception of the third pair sets the initial locking gPTP time.

In some implementations, compared to prior solutions, the present apparatus and methods skip Pdelay measurements and measure the rate ratio to the grandmaster directly, reducing the number of messages that need to travel in the bus, which is particularly good for base10-tls, as the bandwidth is only 10 Mbps. It is to be noted that base10-tls is also a shared medium. Thus, having lots of messages in the network periodically has an impact mostly on latency.

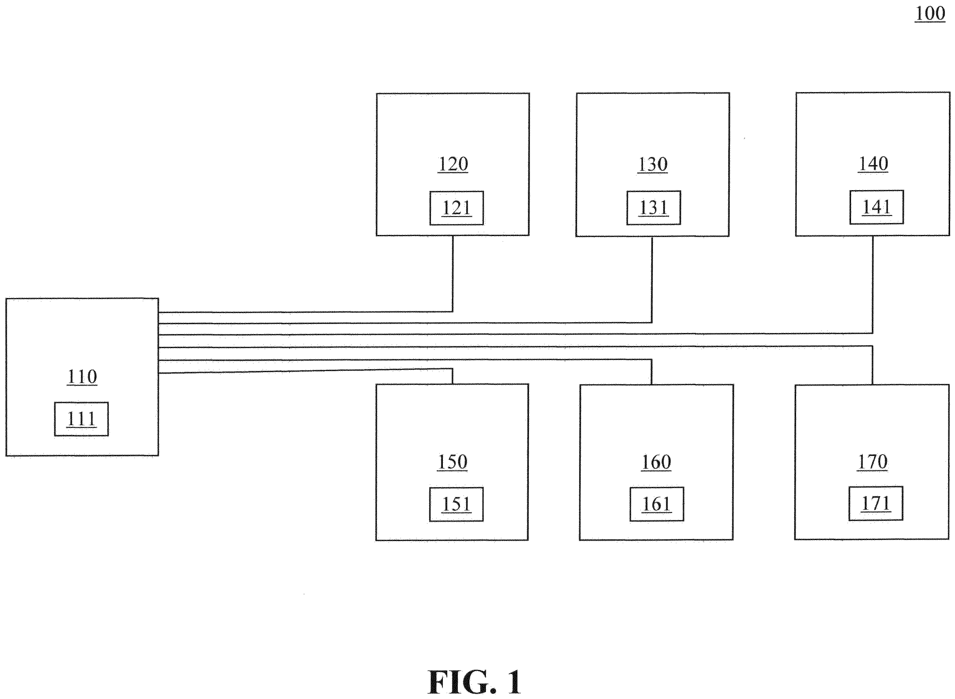

Referring to **FIG. 1****,** an example muti-node network 100 having a primary clock and at least one non-primary clock that is synchronized with the primary clock is shown, in accordance with an example aspect.

The multi-node network 100 includes nodes 110, 120, 130, 140, 150, 160, 170, where each node represents a different node in the multi-node network 100.

In an aspect, multi-node network 100 includes first network node 110 and a second network node 120, as well as other network nodes 130, 140, 150, 160, 170 which may also be processed similarly to the second network node 120 as described herein.

The first network node 110 includes a primary clock 111, also referred to as a grandmaster clock.

The second network node 120 includes a non-primary clock 121, also referred to as a non-master clock, that is configured to be synchronized with the primary clock 111 included in the first network node 110. As used herein, "configured to be synchronized with the primary clock" refers to the process of adjusting a clock parameter including, but not limited to frequency and/or phase, of a non-primary clock to correspond to that of a primary clock, that is, adjusting the non-primary clock frequency and/or phase to minimize an error between the non-primary clock frequency and/or phase and the primary clock frequency and/or phase.

The other network nodes 130, 140, 150, 160, 170 include a respective non-primary clock 131, 141, 151, 161, 171 that is configured to be synchronized with the primary clock included in the first network node 110.

The synchronization of the second network node 120, and optionally any of the other network nodes 130, 140, 150, 160, 170, to the primary clock 111 may be achieved using a three synchronization (sync)/follow-up message pair approach as disclosed herein.

In an aspect, multi-node network 100 uses Generalized Precision Time Protocol (gPTP) time. In an aspect, a proportional-integral (pi) controller is used to adjust parameters (e.g., frequency and/or phase) of non-primary clocks 111, 121, 131, 141, 151, 161, 171 to match the primary clock and thus be in synchronization with the primary clock. In another aspects, other time protocols and controller types may be used.

In an aspect, other devices may be included at each of the network nodes 110, 120, 130, 140, 150, 160, 170 such as complete and/or partial sub-systems, hardware, controllers, peripherals (keyboard, keypad, mouse, trackball, gesture recognition system, eye tracking system, automatic speech recognition (ASR) system, motor, lights, speaker, display, etc.), and so forth.

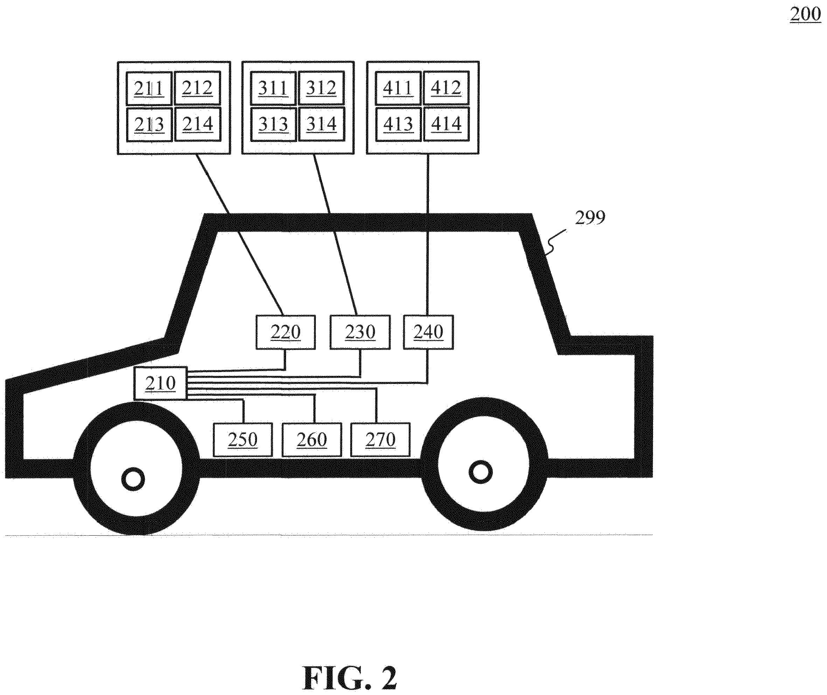

Referring to **FIG. 2****,** another example muti-node network 200 having a primary clock and at least one non-primary clock that is synchronized with the primary clock is shown, in accordance with an example aspect. The multi-node network 200 includes network nodes 210, 220, 230, 240, 250, 260, 270, where each network node represents a different network node in the multi-node network 200. In an aspect, the nodes 210-270 are remote from each other.

Multi-node network 200 can be installed in, and correspond to, a vehicle 299. For example, a Master Control Unit (MCU) network node 210 having a primary clock 211 may be the main controller of the vehicle 299 and a set of network nodes 101 (including network nodes 220, 230, 230, 240, 250, 260, 270) may correspond to vehicle systems such as steering 220, accelerating 230, braking 240, stability 250, audio (telephone, music, etc.) 260, lighting 270, and so forth, and have respective non-primary clocks 221, 231, 241, 251, 261, 271, that are synchronized with the primary clock.

Thus, the network nodes 220, 230, 240, 250, 260, 270 are remote from the MCU network node 210 and may be local to one or more vehicle subsystems. However, it is to be appreciated that aspects of the present disclosure are not limited to a vehicle and can be applied to any type of system having a multi-node network that includes a primary clock at one network node and at least one non-primary clock at another network node, wherein the non-primary clock is configured to be synchronized with the primary clock. Examples of other items to which the present disclosure may be applied include, but are not limited to, a robotic system, a surveillance system, a facility access system, a building management system (BMS), and so forth. For example, in the case of a robotic system, the network nodes can represent motors for controlling movement, arms of robots, sensors (motion, speed, and etc.), and so forth.

Each of the MCU network node 210 and/or the network nodes 220, 230, 240, 250, 260, 270 may include one or more memories 1X1 (i.e., MCU network node 210 includes one or memories 212, network node 220 includes one or more memories 222, network node 230 includes one or more memories 232, network node 240 includes one or more memories 242, and so forth), individually or in combination, having instructions. Each of the MCU 210 network node and/or the network nodes 201 may include one or more processors 1Y2 (i.e., MCU network node 210 includes one or more processors 213, network node 220 includes one or more processors 223, network node 230 includes one or more processors 233, network node 240 includes one or more processors 243, and so forth, with Y being an integer equal to or greater than 1) each coupled to at least one of the one or more memories 1X1 and configurable to execute the instructions. In various aspects, MCU network node 210 is superior to in hierarchy, and provides instructions, for the one or more processors 213, 223, and 233. In various aspects, only MCU network node 210 includes one or more memories and one or more processors, and provides signals for controlling the network nodes 220, 230, 240, 250, 260, 270. In other aspects, MCU network node 210 and one or more but less than all of the network nodes 220, 230, 240, 250, 260, 270 include one or more memories and one or more processors, wherein the MCU network node 210 provides signals for controlling at least some of the network nodes 220, 230, 240, 250, 260, 270.

As used herein, a processor, at least one processor, and/or one or more processors, individually or in combination, configured to perform or operable for performing a plurality of actions is meant to include at least two different processors able to perform different, overlapping or non-overlapping subsets of the plurality actions, or a single processor able to perform all of the plurality of actions. In one non-limiting example of multiple processors being able to perform different ones of the plurality of actions in combination, a description of a processor, at least one processor, and/or one or more processors configured or operable to perform actions X, Y, and Z may include at least a first processor configured or operable to perform a first subset of X, Y, and Z (e.g., to perform X) and at least a second processor configured or operable to perform a second subset of X, Y, and Z (e.g., to perform Y and Z). Alternatively, a first processor, a second processor, and a third processor may be respectively configured or operable to perform a respective one of actions X, Y, and Z. It should be understood that any combination of one or more processors each may be configured or operable to perform any one or any combination of a plurality of actions.

In various aspects, MCU network node 210 and/or network nodes 201 may include one or more peripherical devices 1X4 (i.e., MCU network node 210 includes peripheral device(s) 214, network node 220 includes peripheral device(s) 224, network node 230 includes peripheral device(s) 234, network node 140 includes peripheral device(s) 244, and so forth). For example, the MCU network node 210 may include one or more input devices as peripheral device(s) 214. As a further example, the network nodes 101 may include one or more motors, lights, speakers, displays, and so forth as peripheral device(s) 224, 234, and/or 244.

MCU network node 210 and network nodes 220, 230, 240, 250, 260, 270 are connected by one or more wires 299. For example, but not limited hereto, any of the following cable types may be used: coaxial; twisted pair; and fiber-optic cabling. In current Local Area Networks, the twisted pair cabling is the most popular type of cabling, but the fiber-optic cabling usage is increasing, especially in high performance networks.

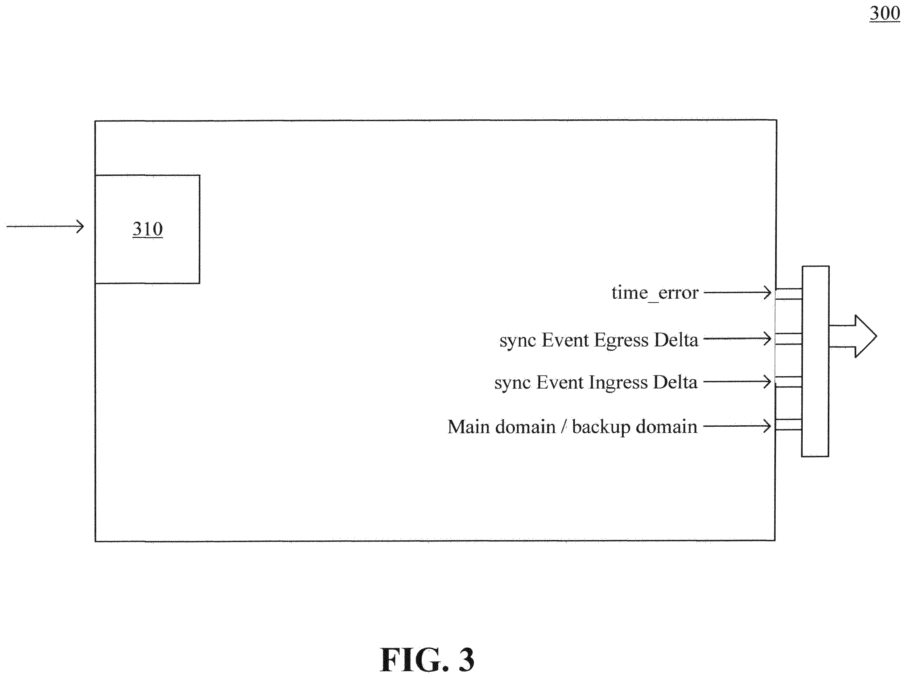

Referring to **FIG. 3****,** an example synchronization (sync) processor 300 is shown, in accordance with an example aspect.

The sync processor 300 includes a frame processor 310 for processing input frames to extract timing information (timestamps, etc.) therefrom.

The sync processor 300 includes one or more processors (e.g., processors 211) that are configured to output the following signals based on the input frames: time_error; syncEventEgressDelta; syncEventIngressDelta; main domain/backup domain. The calculation of these signals is described below.

The sync processor 300 will decode sync information of two simultaneous clocks working in two different domains as long as they share the same time base. The state machine that calculates the syncEventEgressTimestamp data will be modeled using a simplified state machine. In an aspect, the difference is calculated between when the sync message was received by the module (syncEventIngressTimestamp) and the calculated local clock at the GM called syncEventEgressTimestamp. Note, when Pdelays are disabled, it will be possible to add a register map field meanLinkDelay to the syncEventEgressTimestamp in order to take into account the cable latency between the endpoint and the first connected node.

### syncEventEgressTimestamp calculation

### One step mode

The syncEventEgressTimestamp at the PTP Instance that sent the Sync message is the sum of the correctionField and the originTimestamp field of the sync message.

### Two step mode

The syncEventEgressTimestamp at the PTP Instance that sent the Sync/FollowUp messages is the sum of the correctionField in the FollowUp and associated Sync messages, added to the preciseOriginTimestamp field of the FollowUp message.

The time error field contains the difference between the sync event egress timestamp that was calculated and the sync event ingress timestamp that was captured when the corresponding sync message was received using a local timer. timeError(x) = syncEventEgressTimestamp(x) + linkMeanDelay - syncEventlgressTimestamp(x)

The egress delta corresponds to the time difference between the last to calculated sync event egress timestamps. syncEventEgressDelta(x) = syncEventEgressTimestamp(x) - syncEventEgressTimestamp(x - 1)

The ingress delta corresponds to the time difference of the localclock timer between the last to received sync message. syncEventIngressDelta(x) = syncEventIngressTimestamp(x) - syncEventIngressTimestamp(x - 1)

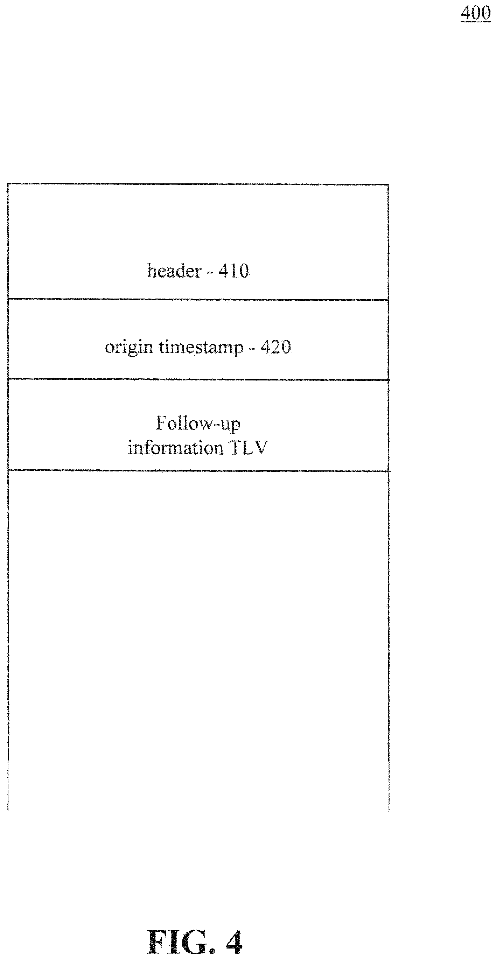

Rferring to **FIG. 4****,** an example packet 400 is shown, in accordance with an example aspect.

The packet 400 includes a header 410, an origin timestamp, and follow-up information Time Length Value (TLV). The origin timestamp and/or the follow up-information may be used in any of a sync message and a follow-up message. For example, in an aspect, the origin timestamp may be used for a sync message as an estimated time the sync message was transmitted and the precision timestamp in the follow-up information may be used as the actual time the sync message was transmitted.

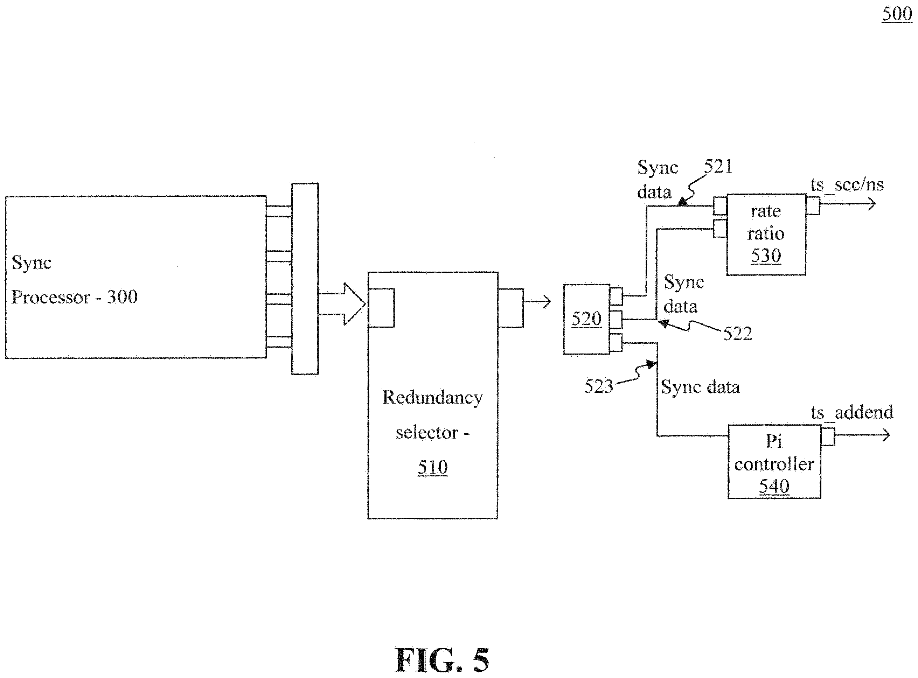

Referring to **FIG. 5****,** an example customized version of gPTP 500 developed for E2B that does not support Pdelay measurements and includes a custom rate ratio algorithm is shown, in accordance with an example aspect.

The customized version of gPTP 500 includes the sync processor 300, a redundancy selector 510, a multiplexer 520, a rate ratio algorithm 530, and a pi controller 540.

The sync processor 300 operates as described above. The redundancy selector 510 is configured to receive the output of the sync processor 300 and select an appropriate message for transmission so as to transmit the first, second, and third message pairs.

The multiplexer 520 is configured to output the first sync/follow-up message pair 521, the second sync/follow-up message pair 522, and the third sync/follow-up message pair 523 responsive to signals from the redundancy selector 510.

The rate ratio algorithm 530 is configured to calculate a rate ratio between a primary clock and a non-primary clock.

The pi controller 540 is configured to adjust the non-primary clock 121 responsive to the herein described use of the rate ratio as a midpoint for clock control.

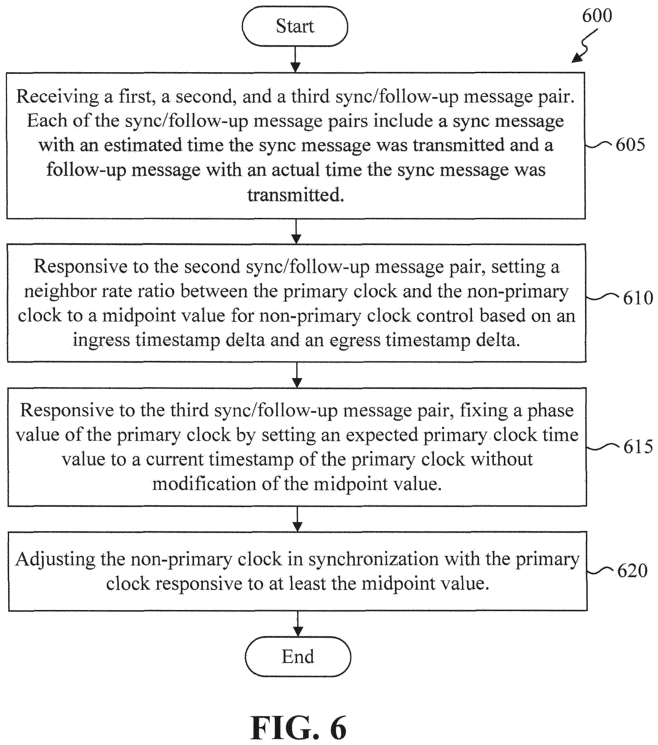

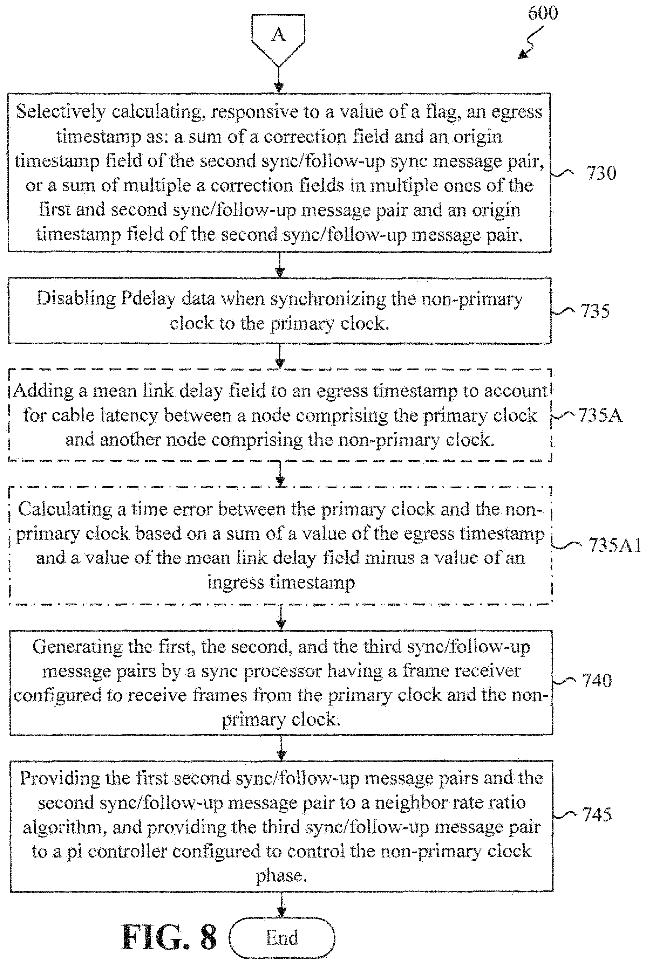

Referring to **FIGS. 6-8****,** an example method 600 is shown for synchronizing a non-primary clock at a first node to a primary clock at a second node in a multi-node broadcast network, in accordance with an example aspect. The actions of the method 600 may be performed, for example, by one or any combination of the respective one or more processors 213 and 223, e.g., based on stored instructions including those for a rate ratio algorithm in one or any combination of the respective one or more memories 212 and 222. It should be understood that while method 600 is described with respect to communications between MCU network node 110 and network node 120, method 600 may be applied to MCU network node 110 and any of the other nodes 130 and/or 140 and/or 150 and/or 160 and/or 170. In an aspect, method 600 may be performed by system 500, where the sync processor 300 represents processor 223

At block 605, the method 600 includes receiving a first 521, a second 522, and a third sync/follow-up message pair 523. Each of the sync/follow-up message pairs 521, 522, 523 include a sync message with an estimated time the sync message was transmitted and a follow-up message with an actual time the sync message was transmitted. These estimated and actual times may be the time indicated in the origin timestamp or derived from the origin timestamp.

At block 610, the method 600 includes, responsive to the second sync/follow-up message pair 522, setting a neighbor rate ratio between the primary clock 111 and the non-primary clock 211 to a midpoint value for non-primary clock control based on an ingress timestamp delta and an egress timestamp delta.

The ingress timestamp delta and egress timestamp deltas are calculated as follows: syncEventEgressDelta(x) = syncEventEgressTimestamp(x) - syncEventEgressTimestamp(x - 1) syncEventIngressDelta(x) = syncEventIngressTimestamp(x) - syncEventIngressTimestamp(x - 1) and

The addend_midpoint is calcuated as follows: addend_midpoint=(syncEgressTimestampDelta*nominal)/midpointsynclngressTimestampDelta.

The neighbor rate ratio is set equal to addend_midpoint.

At block 615, the method 600 includes, responsive to the third sync/follow-up message pair 523, fixing a phase value of the primary clock 111 by setting an expected primary clock time value to a current timestamp of the primary clock 111 without modification of the midpoint value (addend_midpoint).

At block 620, the method 600 includes adjusting the non-primary clock 121 in synchronization with the primary clock 111 responsive to at least the midpoint value.

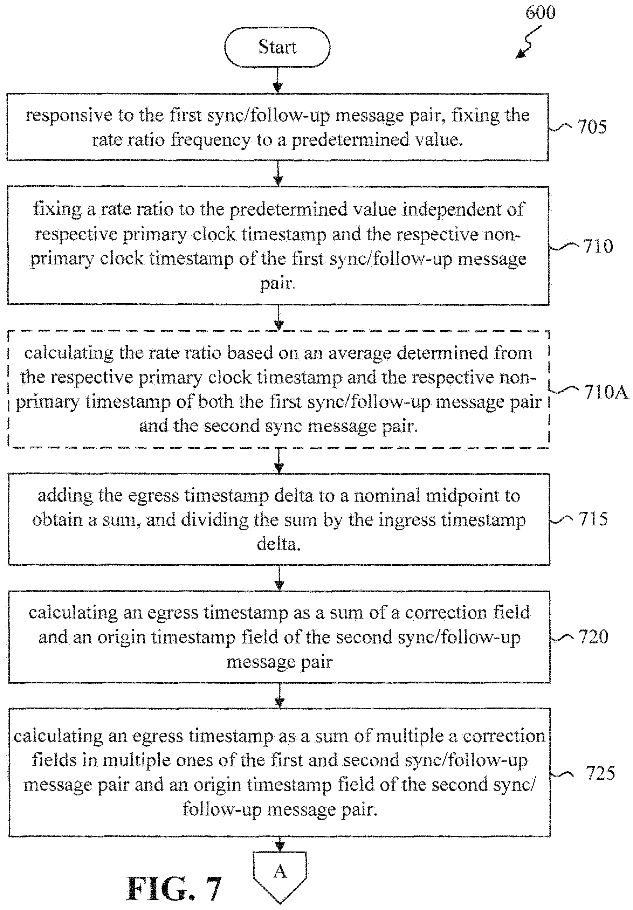

Referring to FIGS. 7-9, further steps of method 600 for synchronizing a non-primary clock 121 at a first node 120 to a primary clock 111 at a second node 110 in a multi-node broadcast network 100 are shown, in accordance with an example aspect.

At block 705, the method 600 includes, responsive to the first sync/follow-up message 521 pair, fixing the rate ratio frequency to a predetermined value. In an aspect, the predetermined value can be a MAC address as described above.

At block 710, the method 600 includes fixing a rate ratio to the predetermined value independent of respective primary clock timestamp and the respective non-primary clock timestamp of the first sync/follow-up message pair 521. The nominal midpoint is currently set at 0xA0000000 but other values could be used.

In an aspect, block 710 may include block 710A.

At block 710A, the method 600 includes calculating the rate ratio based on an average determined from the respective primary clock timestamp and the respective non-primary timestamp of both the first sync/follow-up message pair 521 and the second sync message pair 522.

At block 715, the method 600 includes adding the egress timestamp delta to a nominal midpoint to obtain a sum, and dividing the sum by the ingress timestamp delta. The addend _midpoint may be calculated as follows: addend_midpoint=(syncEgressTimestampDelta*nominal)/midpointsynclngressTimestampDelta

At block 720, the method 600 includes calculating an egress timestamp as a sum of a correction field and an origin timestamp field of the second sync/follow-up message pair 522. Thus, the values from these fields are simply summed.

At block 725, the method 600 includes calculating an egress timestamp as a sum of multiple a correction fields in multiple ones of the first 521 and second sync/follow-up message pair 522 and an origin timestamp field of the second sync/follow-up message pair 522 . Thus, the values from these fields are simply summed.

At block 730, the method 600 includes selectively calculating, responsive to a value of a flag, an egress timestamp as: a sum of a correction field and an origin timestamp field of the second sync/follow-up sync message pair 52, or a sum of multiple a correction fields in multiple ones of the first 521 and second sync/follow-up message pair 522 and an origin timestamp field of the second sync/follow-up message pair 522.

At block 735, the method 600 includes disabling Pdelay data when synchronizing the non-primary clock to the primary clock.

In an aspect, block 730 may include block 730A.

At block 735A, the method 600 includes adding a mean link delay field to an egress timestamp to account for cable latency between a node comprising the primary clock and another node comprising the non-primary clock.

In an aspect, block 735A may include block 735A1.

At block 735A1, the method 600 includes calculating a time error between the primary clock and the non-primary clock based on a sum of a value of the egress timestamp and a value of the mean link delay field minus a value of an ingress timestamp.

At block 740, the method 600 includes generating the first 521, the second 522, and the third sync/follow-up message pair 523 by a sync processor 300 having a frame receiver 310 configured to receive frames from the primary clock 111 and the non-primary clock 121.

At block 745, the method 600 includes providing the first sync/follow-up message pair 521 and the second sync/follow-up message pair 522 to a neighbor rate ratio algorithm 530, and providing the third sync/follow-up message pair 523 to a pi controller 540 configured to control the non-primary clock phase.

### Architecture

The IEEE 802.1AS-2021 standard, also known as the generalized Precision Time Protocol (gPTP), is a protocol that enables precise time synchronization over Ethernet networks. This protocol is an evolution of the original Precision Time Protocol (PTP) that was designed for use in local area networks (LANs) and has now been extended to support wide area networks (WANs) as well. gPTP provides several key features such as transparent clocks, boundary clocks, and time-aware bridges, which can help network operators to achieve high levels of time accuracy, reliability, and interoperability. For E2B, a customized version of gPTP may be implemented that does not support Pdelay measurements and includes a custom rate ratio algorithm.

### Rate-ratio algorithm

In T1S, the measurement of the neighbor rate ratio between the local clock and the neighborhood device, as directed in the 802.1AS specification, is not possible. Consequently, a custom algorithm is provided that computes the rate ratio directly to the grandmaster and yields an accurate measurement in three sync/follow-up pairs.

Following the initial sync/follow-up pair, the deltas cannot be calculated until the second pair is received. Once the syncEgressTimestampDelta and syncIngressTimestampDelta contain value data, the addend _midpoint value for the pi controller can be calculated. The nominal midpoint is currently set at 0xA0000000. Otherwise, the addend _midpoint may be calculated as follows: addend_midpoint=(syncEgressTimestampDelta*nominal)/midpointsyncl ngressTimestampDelta

The addend_midpoint value for the pi controller is a configuration value for a 1588 timer under PTP. The addend _midpoint value indicates the nominal frequency of the timer. After reset, the addend_midpoint is set to 0xA0000000 but this is setting a frequency that is not correct. Thus, after the calculation, a frequency is selected that is closer to the expected frequency for the value 0 of the pi loop. After that, the pi controller is left to fix any remaining error from the initial calculation.

Due to the difficulty in fixing the phase and frequency of the timer simultaneously without resorting to complex calculations, the present disclosure has opted to set the frequency (speed) to the calculated addend_midpoint and the phase (current timer timestamp) to the expected grandmaster time to minimize the area. However, this results in an inaccurate initial phase that worsens as the time difference between the sync message and the follow-up message increases. On the third pair, the present disclosure assumes that the measured error is entirely due to a phase error and adjust the time value without modifying the addend_midpoint. Following this final update, the pi controller can begin fine-tuning the error at the reception of each pair.

### Pi controller

The timer tracks the time error between the grandmaster syncEgressTimestamp and the local clock syncIngressTimestamp, which was previously calculated as time_error using a pi controller.

The coefficients of the controller are required to be tuned for the current sync interval to keep the same synchronization characteristics. The two most common intervals are 31.25 and 125 ms, as such, the user will be able to program the coefficients for these two intervals directly via the register map. For any other interval, the block will auto scale the 31.25 ms. Interval values from 0 (1 second) to -5 (31.25 ms) will be supported. Other interval values will be supported if possible. The pi controller will be locked if the time_error signal (syncIgressTimestamp - syncEgressTimestamp) is smaller than a configurable value from the register map in nanoseconds. The user needs to adjust the threshold to their system characteristics. The value will be set to 80 ns * (num_nodes) * 2. T system will default to 7 nodes, or 1100 us. The system will unlock at any point where the previous condition is not met on the same pair processing step. However, the system will lock only after the condition is met for a configurable number of times which will default to 1. The exception is the first time the previous condition is met after bootup, where the signal will be set to locked on the first pair, regardless of the previous configuration. In order to speed up locking time, the user can configure a different set of coefficients for the first configurable number of frames after bootup. These coefficients can be tuned to provide speed over accuracy.

### Algorithm restarting

In a nominal system, the adaptation loop will track the error and try to correct it bit by bit and the initial rate-ratio adi algorithm will never be run again. However, in the event that the time error measured is too big, the apparatus and method of the present disclosure will understand something serious has happened, like a change of the GM, and will restart the adaptation as if it came from bootup. This is something undesirable as it can generate discontinuities in the timer output. This functionality will only be executed if the time_error signal measured is greater than a relock threshold set in the register map in nanoseconds. The default relock threshold will default to 50 us.

The 802.1 module is a component of networked systems that requires precise timing and synchronization. In the context of the IEEE 802.1 protocol, the module provides a comprehensive set of tools to ensure that the module's clock is synchronized with the rest of the network, and that timing-sensitive applications can operate correctly even in the face of hardware or software failures.

Another feature of the 802.1 module is the PI (proportional-integral) controller used to keep the synchronization between the grandmaster clock and the local clock of a node. The PI controller works by comparing the current time of the local clock with the time received from the grandmaster, and adjusting the frequency of the local clock accordingly. The PI controller has two sections: the P (proportional) section and the I (integral) section. The P section is responsible for adjusting the frequency of the clock based on the current error between the local and grandmaster time, while the I section is responsible for reducing the long-term error by accumulating the error over time. To configure the PI controller, and achieve optimal performance with the PI controller, the 802.1 module provides both fast and slow coefficients for the P and I sections of the controller. The fast coefficients are used at the start of the synchronization process to provide a quick response to sudden changes in the error, while the slow coefficients are used for slower adjustments that provide better long-term stability. To ensure that the PI controller responds appropriately to changes in the synchronization, the module provides a field for setting the number of frames where the selected coefficients will use the fast coefficients, called num_fast_adjust_frames. By using fast and slow coefficients and carefully selecting the appropriate values, the 802.1 module can achieve both a quick and accurate synchronization and good long-term stability.

Moreover, the 802.1 module is designed to support multidrop networks. In such networks, it is not possible to measure Pdelay, which is commonly used to measure the propagation delay between two clocks. To overcome this limitation, the module uses a custom rate ratio algorithm that estimates the propagation delay based on the difference in frequency between the grandmaster and the local clock. This algorithm works by calculating the ratio of the frequency of the grandmaster clock to the frequency of the local clock and adjusting the local clock accordingly. By using this approach, the module can achieve accurate synchronization even in complex network topologies where Pdelay measurement is not possible.

Overall, the 802.1 module provides a comprehensive set of tools for managing clock synchronization in complex networked systems. Its features for managing the lock flag, configuring the PI controller, supporting redundancy, and monitoring the synchronization process which may be used with any timing-sensitive application. Its support for multidrop networks and custom rate ratio algorithm ensures accurate synchronization even in challenging network topologies where Pdelay measurement is not possible.

These and other variations of the present disclosure are readily contemplated by one of ordinary skill in the art given the teachings of the present disclosure provided herein.

Aspects of the present disclosure include one or any combination of the following clauses.

Clause 1. A method for synchronizing a non-primary clock at a first node to a primary clock at a second node in a multi-node broadcast network, the method comprising: receiving a first, a second, and a third sync/follow-up message pair, each comprising a sync message with an estimated time the sync message was transmitted and a follow-up message with an actual time the sync message was transmitted, wherein the method further comprises: responsive to the second sync/follow-up message pair, setting a neighbor rate ratio between the primary clock and the non-primary clock to a midpoint value for non-primary clock control based on an ingress timestamp delta and an egress timestamp delta; responsive to the third sync/follow-up message pair, fixing a phase value of the primary clock by setting an expected primary clock time value to a current timestamp of the primary clock without modification of the midpoint value; and adjusting the non-primary clock in synchronization with the primary clock responsive to at least the midpoint value.

Clause 2. The method in accordance with clause 1, wherein the method further comprises, responsive to the first sync/follow-up message pair, fixing the rate ratio frequency to a predetermined value.

Clause 3. The method in accordance with any preceding clauses, further comprising fixing the rate ratio to the predetermined value during a given interval independent of respective primary clock timestamp and the respective non-primary clock timestamp of the first sync/follow-up message pair.

Clause 4. The method in accordance with any preceding clauses, calculating the rate ratio based on an average determined from the respective primary clock timestamp and the respective non-primary timestamp of both the first sync/follow-up message pair and the second sync message pair.

Clause 5. The method in accordance with any preceding clauses, further comprising adding the egress timestamp delta to a nominal midpoint to obtain a sum, and dividing the sum by the ingress timestamp delta.

Clause 6. The method in accordance with any preceding clauses, further comprising calculating an egress timestamp as a sum of a correction field and an origin timestamp field of the second sync/follow-up message pair.

Clause 7. The method in accordance with any preceding clauses, further comprising calculating an egress timestamp as a sum of multiple a correction fields in multiple ones of the first and second sync/follow-up message pair and an origin timestamp field of the second sync/follow-up message pair.

Clause 8. The method in accordance with any preceding clauses, further comprising selectively calculating, responsive to a value of a flag, an egress timestamp as: a sum of a correction field and an origin timestamp field of the second sync/follow-up sync message pair, or a sum of multiple a correction fields in multiple ones of the first and second sync/follow-up message pair and an origin timestamp field of the second sync/follow-up message pair.

Clause 9. The method in accordance with any preceding clauses, further comprising disabling Pdelay data when synchronizing the non-primary clock to the primary clock.

Clause 10. The method in accordance with any preceding clauses, further comprising adding a mean link delay field to an egress timestamp to account for cable latency between a node comprising the primary clock and another node comprising the non-primary clock.

Clause 11. The method in accordance with any preceding clauses, further comprising calculating a time error between the primary clock and the non-primary clock based on a sum of a value of the egress timestamp and a value of the link delay field minus a value of an ingress timestamp.

Clause 12. The method in accordance with any preceding clauses, further comprising generating the first, the second, and the third sync/follow-up message pairs by a sync processor having a frame receiver configured to receive frames from the primary clock and the non-primary clock.

Clause 13. The method in accordance with any preceding clauses, further comprising: providing the first sync/follow-up message pairsand the second sync/follow-up message pair to a neighbor rate ratio algorithm; and providing the third sync/follow-up message pair to a pi controller configured to control the non-primary clock phase.

Clause 14. A system for synchronizing a non-primary clock at a first node to a primary clock at a second node in a multi-node broadcast network, the system comprising: a sync processor having a frame receiver configured to receive frames from the primary clock and the non-primary clock and generate a first, a second, and a third sync/follow-up message pair, each comprising a sync message with an estimated time the sync message was transmitted and a follow-up message with an actual time the sync message was transmitted, wherein the sync processor is further configured to: responsive to the second sync/follow-up message pair, set a neighbor rate ratio between the primary clock and the non-primary clock to a midpoint value for non-primary clock control based on an ingress timestamp delta and an egress timestamp delta; responsive to the third sync/follow-up message pair, fix a phase value of the primary clock by setting an expected primary clock time value to a current timestamp of the primary clock without modification of the midpoint value; and a pi controller configured to adjust the non-primary clock in synchronization with the primary clock responsive to at least the midpoint value.

Clause 15. The system in accordance with clause 14, wherein the sync processor, responsive to the first sync/follow-up message pair, fixes the rate ratio frequency to a predetermined value.

Clause 16. The system in accordance with any preceding clauses, wherein the rate ratio is fixed to the predetermined value during a given interval independent of respective primary clock timestamp and the respective non-primary clock timestamp of the first sync/follow-up message pair.

Clause 17. The system in accordance with any preceding clauses, wherein the rate ratio is calculated based on an average determined from the respective primary clock timestamp and the respective non-primary timestamp of both the first sync/follow-up message pair and the second sync/follow-up message pair.

Clause 18. The system in accordance with any preceding clauses, further comprising adding the egress timestamp delta to a nominal midpoint to obtain a sum, and dividing the sum by the ingress timestamp delta.

Clause 19. The system in accordance with any preceding clauses, further comprising calculating an egress timestamp as a sum of a correction field and an origin timestamp field of the second sync/follow-up message pair.

Clause 20. The system in accordance with any preceding clauses, further comprising calculating an egress timestamp as a sum of multiple a correction fields in multiple ones of the first and second sync/follow-up message pair and an origin timestamp field of the second sync/follow-up message pair.

Clause 21. The system in accordance with any preceding clauses, further comprising selectively calculating, responsive to a value of a flag, an egress timestamp as: a sum of a correction field and an origin timestamp field of the second sync/follow-up message pair, or a sum of multiple a correction fields in multiple ones of the first and second sync/follow-up message pair and an origin timestamp field of the second sync/follow-up message pair.

Clause 22. The system in accordance with any preceding clauses, further comprising disabling Pdelay data when synchronizing the non-primary clock to the primary clock.

Clause 23. The system in accordance with any preceding clauses, further comprising adding a mean link delay field to an egress timestamp to account for cable latency between a node comprising the primary clock and another node comprising the non-primary clock.

Clause 24. The system in accordance with any preceding clauses, further comprising calculating a time error between the primary clock and the non-primary clock based on a sum of a value of the egress timestamp and a value of the link delay field minus a value of an ingress timestamp.

Clause 25. The system in accordance with any preceding clauses, further comprising generating the first, the second, and the third sync/follow-up message pairs by a sync processor having a frame receiver configured to receive frames from the primary clock and the non-primary clock.

Clause 26. The system in accordance with any preceding clauses, further comprising: providing the first sync/follow-up message pair and the second sync/follow-up message pair to a neighbor rate ratio algorithm; and providing the third sync/follow-up message pair to a pi controller configured to control the non-primary clock phase.

Aspects of the present disclosure may be implemented as a system, a method, and/or a computer program product at any possible technical detail level of integration. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages.

Aspects of the present disclosure are described herein with reference to flowchart illustrations and/or block diagrams of methods, apparatus (systems), and computer program products. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

In various aspects, a computer-implemented method and a computer program product configured to manage a network node of a system in an absence of MCU intervention are provided. The computer program product includes one or more non-transitory computer-readable media, having instructions stored thereon that when executed by one or more processors cause the one or more processors, individually or in combination, to perform a method as described herein.

The flowchart and block diagrams in the Figures illustrate the architecture, functionality, and operation of possible implementations of systems, methods, and computer program products according to various aspects of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It should be noted that all of the specifications, dimensions, and relationships outlined herein (e.g., the number of elements, operations, steps, etc.) have only been offered for purposes of example and teaching only. Such information may be varied considerably without departing from the spirit of the present disclosure, or the scope of the appended claims. The specifications apply only to one non-limiting example and, accordingly, they should be construed as such. In the foregoing description, example aspects have been described with reference to particular component arrangements. Various modifications and changes may be made to such aspects without departing from the scope of the appended claims. The description and drawings are, accordingly, to be regarded in an illustrative rather than in a restrictive sense.

Note that with the numerous examples provided herein, interaction may be described in terms of two, three, four, or more electrical components. However, this has been done for purposes of clarity and example only. It should be appreciated that the system may be consolidated in any suitable manner. Along similar design alternatives, any of the illustrated components, modules, and elements of the FIGURES may be combined in various possible configurations, all of which are clearly within the broad scope of this Specification. In certain cases, it may be easier to describe one or more of the functionalities of a given set of flows by only referencing a limited number of electrical elements. It should be appreciated that the electrical circuits of the FIGURES and its teachings are readily scalable and may accommodate a large number of components, as well as more complicated/sophisticated arrangements and configurations. Accordingly, the examples provided should not limit the scope or inhibit the broad teachings of the electrical circuits as potentially applied to myriad other architectures.

It should also be noted that in this Specification, references to various features (e.g., elements, structures, modules, components, steps, operations, characteristics, etc.) included in "one aspect", "example aspect", "an aspect", "another aspect", "some aspects", "various aspects", "other aspects", "alternative aspect", and the like are intended to mean that any such features are included in one or more aspects of the present disclosure, but may or may not necessarily be combined in the same aspects.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

It should also be noted that the functions related to circuit architectures illustrate only some of the possible circuit architecture functions that may be executed by, or within, systems illustrated in the FIGURES. Some of these operations may be deleted or removed where appropriate, or these operations may be modified or changed considerably without departing from the scope of the present disclosure. In addition, the timing of these operations may be altered considerably. The preceding operational flows have been offered for purposes of example and discussion. Substantial flexibility is provided by aspects described herein in that any suitable arrangements, chronologies, configurations, and timing mechanisms may be provided without departing from the teachings of the present disclosure.

Numerous other changes, substitutions, variations, alterations, and modifications may be ascertained to one skilled in the art and it is intended that the present disclosure encompass all such changes, substitutions, variations, alterations, and modifications as falling within the scope of the appended claims.

Note that all optional features of the device and system described above may also be implemented with respect to the method or process described herein and specifics in the examples may be used anywhere in one or more aspects.

The "means for" in these instances (above) may include (but is not limited to) using any suitable component discussed herein, along with any suitable software, circuitry, hub, computer code, logic, algorithms, hardware, controller, interface, link, bus, communication pathway, etc.

Note that with the example provided above, as well as numerous other examples provided herein, interaction may be described in terms of two, three, or four network elements. However, this has been done for purposes of clarity and example only. In certain cases, it may be easier to describe one or more of the functionalities of a given set of flows by only referencing a limited number of network elements. It should be appreciated that topologies illustrated in and described with reference to the accompanying FIGURES (and their teachings) are readily scalable and may accommodate a large number of components, as well as more complicated/sophisticated arrangements and configurations. Accordingly, the examples provided should not limit the scope or inhibit the broad teachings of the illustrated topologies as potentially applied to myriad other architectures.

It is also important to note that the steps in the preceding flow diagrams illustrate only some of the possible signaling scenarios and patterns that may be executed by, or within, communication systems shown in the FIGURES. Some of these steps may be deleted or removed where appropriate, or these steps may be modified or changed considerably without departing from the scope of the present disclosure. In addition, a number of these operations have been described as being executed concurrently with, or in parallel to, one or more additional operations. However, the timing of these operations may be altered considerably. The preceding operational flows have been offered for purposes of example and discussion. Substantial flexibility is provided by communication systems shown in the FIGURES in that any suitable arrangements, chronologies, configurations, and timing mechanisms may be provided without departing from the teachings of the present disclosure.

Although the present disclosure has been described in detail with reference to particular arrangements and configurations, these example configurations and arrangements may be changed significantly without departing from the scope of the present disclosure. For example, although the present disclosure has been described with reference to particular communication exchanges, aspects described herein may be applicable to other architectures.

Numerous other changes, substitutions, variations, alterations, and modifications may be ascertained to one skilled in the art and it is intended that the present disclosure encompass all such changes, substitutions, variations, alterations, and modifications as falling within the scope of the appended claims. In order to assist the United States Patent and Trademark Office (USPTO) and, additionally, any readers of any patent issued on this application in interpreting the claims appended hereto, Applicant wishes to note that the Applicant: (a) does not intend any of the appended claims to invoke paragraph six (6) of 35 U.S.C. section 142 as it exists on the date of the filing hereof unless the words "means for" or "step for" are specifically used in the particular claims; and (b) does not intend, by any statement in the specification, to limit this disclosure in any way that is not otherwise reflected in the appended claims.

## Claims

1. A computer-implemented method for synchronizing a non-primary clock at a first node to a primary clock at a second node in a multi-node broadcast network, the method comprising:
receiving a first, a second, and a third synchronization/follow-up (sync/follow-up) message pair, each comprising a sync message with an estimated time the sync message was transmitted and a follow-up message with an actual time the sync message was transmitted,
wherein the method further comprises:
responsive to the second sync/follow-up message pair, setting a neighbor rate ratio between the primary clock and the non-primary clock to a midpoint value for non-primary clock control based on an ingress timestamp delta and an egress timestamp delta;
responsive to the third sync/follow-up message pair, fixing a phase value of the primary clock by setting an expected primary clock time value to a current timestamp of the primary clock without modification of the midpoint value; and
adjusting the non-primary clock in synchronization with the primary clock responsive to at least the midpoint value being set to the neighbor rate ratio.

2. The method in accordance with claim 1, further comprising, responsive to the first sync message pair, fixing the rate ratio to a predetermined value.

3. The method in accordance with claim 2, further comprising fixing the rate ratio to the predetermined value during a given interval independent of respective primary clock timestamp and the respective non-primary clock timestamp of the first sync/follow-up message pair.

4. The method in accordance with claim 1, further comprising calculating the rate ratio based on an average determined from the respective primary clock timestamp and the respective non-primary timestamp of both the first sync/follow-up message pair and the second sync message pair.

5. The method in accordance with claim 1, further comprising adding the egress timestamp delta to a nominal midpoint to obtain a sum, and dividing the sum by the ingress timestamp delta.

6. The method in accordance with claim 1, further comprising calculating an egress timestamp as a sum of a correction field and an origin timestamp field of the second sync/follow-up message pair.

7. The method in accordance with claim 1, further comprising calculating an egress timestamp as a sum of multiple a correction fields in multiple ones of the first and second sync/follow-up message pair and an origin timestamp field of the second sync/follow-up message pair.

8. The method in accordance with claim 1, further comprising selectively calculating, responsive to a value of a flag, an egress timestamp as:
a sum of a correction field and an origin timestamp field of the second sync/follow-up message pair, or
a sum of multiple a correction fields in multiple ones of the first and second sync/follow-up message pair and an origin timestamp field of the second sync/follow-up message pair.

9. The method in accordance with claim 1, further comprising disabling Pdelay data when synchronizing the non-primary clock to the primary clock.

10. The method in accordance with claim 9, further comprising adding a mean link delay field to an egress timestamp to account for cable latency between a node comprising the primary clock and another node comprising the non-primary clock.

11. The method in accordance with claim 10, further comprising calculating a time error between the primary clock and the non-primary clock based on a sum of a value of the egress timestamp and a value of the link delay field minus a value of an ingress timestamp.

12. The method in accordance with claim 1, further comprising generating the first, the second, and the third sync/follow-up message pairs by a sync processor having a frame receiver configured to receive frames from the primary clock and the non-primary clock.

13. The method in accordance with claim 1, further comprising:
providing the first sync/follow-up message pair and the second sync/follow-up message pair to a neighbor rate ratio algorithm; and
providing the third sync/follow-up message pair to a pi controller configured to control the non-primary clock phase.

14. A system for synchronizing a non-primary clock at a first node to a primary clock at a second node in a multi-node broadcast network, the system comprising:
a sync processor having a frame receiver configured to receive frames from the primary clock and the non-primary clock and generate a first, a second, and a third synchronization/follow-up (sync/follow-up) message pair, each comprising a sync message with an estimated time the sync message was transmitted and a follow-up message with an actual time the sync message was transmitted,
wherein the sync processor is further configured to:
responsive to the second sync/follow-up message pair, set a neighbor rate ratio between the primary clock and the non-primary clock to a midpoint value for non-primary clock control based on an ingress timestamp delta and an egress timestamp delta;
responsive to the third sync/follow-up message pair, fix a phase value of the primary clock by setting an expected primary clock time value to a current timestamp of the primary clock without modification of the midpoint value; and
a pi controller configured to adjust the non-primary clock in synchronization with the primary clock responsive to at least the midpoint value being set to the neighbor rate ratio.

15. The system in accordance with claim 14, the system being further arranged to perform the method of any of claims 2 to 13.
